# EUROPÄISCHE PATENTANMELDUNG

(11) **EP 1 598 382 A1**
(43) Veröffentlichungstag der Anmeldung: **23.11.2005**
(21) Anmeldenummer: 04102159.3
(22) Anmeldetag: 17.05.2004
(51) Int. Cl.: C08G 18/08, C08G 18/79, C09J 175/04, C08J 5/12

(54) **Einkomponentiger wässriger Dispersionsklebstoff**

(71) Anmelder: Sika Technology AG, 6340 Baar (CH)
(72) Erfinder: Linnenbrink, Martin, 21641 Apensen (DE); Kühnemund, Peter, 25727 Frestedt (DE); Müller, Jürgen, 22523 Hamburg (DE)
(74) Vertreter: Isler, Jörg

(57) **Zusammenfassung**

Die vorliegende Erfindung betrifft einkomponentige wässrige Dispersionsklebstoffe, welche mindestens ein Copolymer A der Monomere Ethylen, Vinylacetat und gegebenenfalls mindestens einem (Meth)acrylat sowie entweder mindestens ein Polyurethan mit Carboxylgruppen und Carbodiimidgruppen PUR-COOH-CDI oder eine Mischung eines Polyurethan mit Carboxylgruppen PUR-COOH und einem Carbodiimid CDI enthalten. Diese Dispersionsklebstoffe sind insbesondere gut geeignet als Kaschier- und Siegelklebstoffe. Weiterhin betrifft die Erfindung das Vorbeschichten von flächigen Materialien mit einem einkomponentigen wässrigen Dispersionsklebstoff.

## Beschreibung

### Technisches Gebiet

Die Erfindung betrifft das Gebiet der einkomponentigen wässrigen Dispersionsklebstoffe.

### Stand der Technik

Dispersionen werden seit langem als Klebstoffe, insbesondere beim Verkleben von Textilien und Folien, verwendet. Es sind seit längerem zweikomponentige Polyurethan-Dispersionsklebstoffe bekannt. Zweikomponentige Systeme weisen allerdings den grossen Nachteil auf, dass die Topfzeit, das heisst der Zeitraum, in dem diese Systeme nach ihrer Vermischung verarbeitet werden können, eng begrenzt ist. Weiterhin ist ein zusätzlicher Arbeitsschritt des Mischens für den Anwender vorhanden, der mit Fehlern behaftet sein kann und damit zu Qualitätseinbussen führen kann.

Um diese Nachteile zu vermindern wurden Anstrengungen gemacht einkomponentige Polyurethan-Dispersionsklebstoffe zu formulieren. So beschreibt beispielsweise EP1 013 690 A1 eine einkomponentige wässrige Dispersion basierend auf einem oberflächendeaktivierten Polyisocyanat und einem isocyanatreaktiven Polymeren. WO 00/11060 A1 und EP 1 000 104 B1 beschreiben einkomponentige Polyurethan Dispersionen die im wesentlichen einerseits Carbodiimide oder Carbodiimid-gruppen enthaltende Polymere sowie Carboxylgruppen enthaltenden Polymeren enthalten.

Diese einkomponentigen Polyurethandispersionen sind einerseits teuer und weisen andererseits Nachteile bezüglich Haftung und Beständigkeit in feucht-warmem Klima auf.

### Darstellung der Erfindung

Aufgabe der vorliegenden Erfindung ist es daher, einkomponentige wässrige Dispersionsklebstoffe zur Verfügung zu stellen, welche die Nachteile des Standes des Technik überwinden. Überraschenderweise wurde gefunden, dass einkomponentige wässrige Dispersionsklebstoffe gemäss Anspruch 1 diese Aufgabe lösen.

Diese einkomponentigen wässrigen Dispersionsklebstoffe zeichnen sich unter anderem dadurch aus, dass durch den Einsatz des preisgünstigeren Copolymeren **A** sich der Preis des wässrigen Dispersionsklebstoffes reduziert ohne Einbussen in den wesentlichen Eigenschaften. Weiterhin hat sich gezeigt, dass die erfindungsgemässen einkomponentigen wässrigen Dispersionsklebstoffe verbesserte Haftung auf Kunststoffen sowie eine Verbesserung der Beständigkeit der Klebung in feucht/warmem Klima erreichen.

Unter gewissen Umständen wurden ebenfalls eine Verbesserung der Anfangsfestigkeit nach der Verklebung und eine Verbesserung des Oberflächentacks festgestellt.

Die erfindungsgemässen einkomponentigen Klebstoffe eigenen sich speziell gut als Kaschier- und Siegelklebstoffe.

### Wege zur Ausführung der Erfindung

Die vorliegende Erfindung betrifft einkomponentige wässrige Dispersionsklebstoffe, welche mindestens ein Copolymer **A** der Monomere Ethylen, Vinylacetat und gegebenenfalls mindestens einem (Meth)acrylat sowie entweder mindestens ein Polyurethan mit Carboxylgruppen und Carbodiimidgruppen oder eine Mischung eines Polyurethan mit Carboxylgruppen und einem Carbodiimid enthalten.

Als Copolymer **A** eignen sich einerseits EthylenNinylacetat-Copolymere (EVA) und andererseits Copolymere aus den Monomeren Ethylen, Vinylacetat und mindestens einem (Meth)acrylat.

Als (Meth)acrylat-Monomere kommen grundsätzlich alle Ester der Acrylsäure und Methacrylsäure zum Einsatz, wobei je nach Anwendungen und Erfordernisse der Klebstoffe aus dieser Klasse spezifische Monomere oder Monomermischungen ausgewählt werden. Es hat sich gezeigt, dass es vorteilhaft ist, wenn das (Meth)acrylat ein Acrylat ist. Insbesondere geeignet haben sich (Meth)acrylat-Monomere, welche ausgewählt sind aus der Gruppe umfassend 2-Ethylhexylacrylat, 2-Hydroxyethylacrylat und 2-Hydroxypropylacrylat und 2-Hydroxybutylacrylat sowie Mischungen davon. Insbesondere werden für die Herstellung des Copolymeren **A** neben Ethylen und Vinylacetat ein oder zwei Monomere der beschriebenen (Meth)acrylat-Monomere verwendet und dadurch ein Terpolymer oder ein Quaterpolymer hergestellt.

Die Verhältnisse der Segmente herrührend von den verwendeten Monomeren im Copolymer **A** können breit variieren. Das EthylenNinylacetat-Gewichts-Verhältnis ist bevorzugt 1 oder kleiner, insbesondere kleiner als 0.66, mehr bevorzugt kleiner als 0.4. Weiterhin ist der Gehalt der Summe aller (Meth)acrylat-Segmente kleiner als 50 Gew.-%, insbesondere kleiner als 35 Gew.-%, am Copolymer **A**.

Als besonders geeignet gezeigt haben sich wässrige Dispersionsklebstoffe, die Mischung von Copolymeren **A** wie sie oben beschreiben wurden umfassen. Hierbei besonders geeignet haben sich Mischungen eines Copolymer **A** aus Ethylen und Vinylacetat und von mindestens einem Copolymer **A** aus Ethylen und Vinylacetat und mindestens einem (Meth)acrylat.

Der einkomponentige wässrige Dispersionsklebstoff enthält weiterhin entweder mindestens ein Polyurethan mit Carboxylgruppen und Carbodiimidgruppen (im Folgenden jeweils als **PUR-COOH-CDI** bezeichnet), oder eine Mischung eines Polyurethan mit Carboxylgruppen (im Folgenden jeweils als **PUR-COOH** bezeichnet) und einem Carbodiimid (im Folgenden jeweils als **CDI** bezeichnet).

Polyurethan mit Carboxylgruppen **PUR-COOH** sind Polyurethane, die mindestens zwei Carboxylgruppen pro Makromolekül, aufweisen. Solche Verbindungen sind seit langem bekannt und werden in der Formulierung von wässrigen Polyurethan-Dispersionen eingesetzt. Typischerweise werden diese aus Polyisocyanaten und Carboxylgruppen- und NCO-aktive-Gruppenaufweisende Verbindungen und gegebenenfalls übliche Polyole, insbesondere Diole hergestellt. Solche Carboxylgruppen- und NCO-aktive-Gruppenaufweisende Verbindungen sind beispielsweise Aminocarbonsäuren, Hydroxycarbonsäuren, insbesondere Dihydroxyalkylcarbonsäuren, wie beispielsweise Dimethylolpropionsäure oder dazu strukturähnliche Diolcarbonsäuren. Es hat sich gezeigt, dass sehr geeignete Polyurethane mit Carboxylgruppen **PUR-COOH** solche sind, wie sie beispielsweise als "Polymer (PII)" in DE 100 00 656 A1 oder WO 01/34559 A1 beschrieben sind.

Carbodiimid **CDI** sind Verbindungen die mindestens eine Carbodiimid-Gruppe -N=C=N- aber keine Carboxylgruppen enthalten. Besonders geeignete Carbodiimide **CDI** sind solche die das Strukturelement der Formel (I) aufweisen,

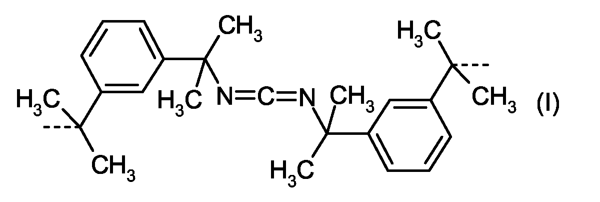

Besonderes geeignete solche Carbodiimide **CDI** sind beispielsweise als "Carbodiimide Ibii" in WO 00/11060 beschrieben.

Polyurethan mit Carboxylgruppen und Carbodiimidgruppen **PUR-COOH-CDI** sind Polyurethane, welche neben Carboxylgruppen auch noch Carbodiimidgruppen -N=C=N- enthalten.

Besonders geeignete Polyurethan mit Carboxylgruppen und Carbodiimidgruppen **PUR-COOH-CDI** sind solche die das Strukturelement der Formel (I) aufweisen.

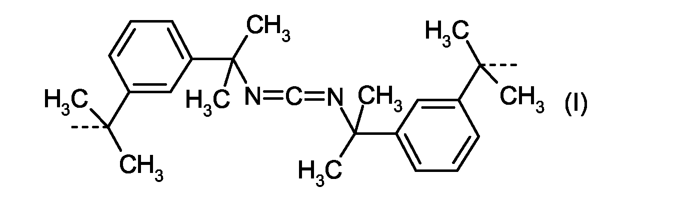

Solche Verbindungen sind beispielsweise in DE 100 01 777 A1 oder als "Polymere (la)" in EP 1 000 104 B1 beschrieben.

Unter gewissen Umständen hat es sich als vorteilhaft erwiesen, dass der Dispersionsklebstoff gleichzeitig mindestens ein Carbodiimid **CDI** und mindestens ein Polyurethan mit Carboxylgruppen und Carbodiimidgruppen **PUR-COOH-CDI** enthält.

Ebenso kann es von Vorteil sein, dass der wässrige Dispersionsklebstoff gleichzeitig mindestens ein Polyurethan mit Carboxylgruppen und Carbodiimidgruppen **PUR-COOH-CDI** und mindestens ein Polyurethan mit Carboxylgruppen **PUR-COOH** enthält.

Der wässrige Dispersionsklebstoff enthält weiterhin Wasser. Der Wasseranteil im wässrigen Dispersionsklebstoff beträgt typischerweise zwischen 70 Gew.-% und 40 Gew.-%, insbesondere zwischen 55 Gew.-% und 45 Gew.-%.

Das Gewichts-Verhältnis von **A** zur Summe von **PUR-COOH-CDI** und **PUR-COOH** liegt vorzugsweise zwischen 0.1 und 10, insbesondere zwischen 1 und 6. Wenn der Polyurethan-Anteil, d.h. Summe von **PUR-COOH-CDI** und **PUR-COOH**, kleiner ist, tritt einerseits eine Reduktion der Vernetzungsdichte und damit der Festigkeit auf und andererseits kann eine Verschlechterung der Wärmebeständigkeit beobachtet werden. Andererseits nimmt die Beständigkeit gegen PVC-Weichmacher, welche in vielen mit dem Dispersionsklebstoff zu verklebenden Untergründen vorhanden sind, stark ab. Schliesslich ist vielfach eine höhere Temperatur zur Verarbeitung notwendig. Wenn der Polyurethan-Anteil grösser ist, sind die gefundenen Vorteile der vorliegenden Erfindung nicht mehr sehr ausgeprägt und die Eigenschaften unterscheiden sich nicht mehr wesentlich von den bekannten einkomponentigen Polyurethandispersionsklebstoffen.

In einer Ausführungsform der Erfindung enthält der einkomponentige wässrige Dispersionsklebstoff weiterhin mindestens ein Poly((meth)acrylat). Solche Poly((meth)acrylat) sind typischerweise Copolymere und sind dispergierfähig.

Es hat sich weiter gezeigt, dass der Dispersionsklebstoff vorteilhaft Stabilisatoren enthält. Grundsätzlich sind dies solche Stabilisatoren, wie sie bei wässrigen Dispersionen üblicherweise verwendet werden. es hat sich jedoch gezeigt, dass die Verwendung von Stabilisatoren zu sehr lagerstabilen Dispersionsklebstoffen führt, wenn der Stabilisator ausgewählt ist aus der Gruppe umfassend Netzmittel, Cellulose, Polyvinylalkohol, Polyvinylpyrrolidon sowie Mischungen davon.

Weiterhin kann der wässrige Dispersionsklebstoff mindestens einer der weiteren Bestandteile enthalten, welcher ausgewählt ist aus der Gruppe umfassend Verdickungsmittel, Alterungsschutzmittel, Fungizide, Pigmente, Farbstoffe, Netzmittel, Antischaummittel, Mattierungsmittel und Füllstoffe.

Die Herstellung des Dispersionsklebstoffes erfolgt auf die für Dispersionsklebstoffe übliche Art und Weise. Die Bestandteile Copolymer **A**, Polyurethan mit Carboxylgruppen und Carbodiimidgruppen **PUR-COOH-CDI** oder Polyurethan mit Carboxylgruppen **PUR-COOH** / Carbodiimid **CDI** können zusammen zu einer Dispersion verarbeitet werde oder es können unterschiedliche Dispersionen von **A**, Polyurethan mit Carboxylgruppen und Carbodiimidgruppen **PUR-COOH-CDI** oder Polyurethan mit Carboxylgruppen **PUR-COOH** miteinander gemischt werden. Bevorzugt wird eine Dispersion eines Copolymer **A** verwendet, welche auf einen pH von über 7, insbesondere auf pH zwischen 7.5 und 8.5 eingestellt wird. Die Anpassung des pHs erfolgt typischerweise mit Ammoniak, organischen Aminen oder einer wässrigen Lauge eines Alkalihydroxides, insbesondere einer wässrigen NatriumhydroxidLösung.

Anschliessend wird diese Dispersion des Copolymeren **A** mit einer Dispersion eines Polyurethan mit Carboxylgruppen und Carbodiimidgruppen **PUR-COOH-CDI** oder mit einer Dispersion eines Polyurethan mit Carboxylgruppen **PUR-COOH** vermischt.

Das Carbodiimid **CDI** kann bei Bedarf nach dem Mischen der Dispersionen zugegeben sein oder es kann der Dispersion des Copolymeren **A** oder der Dispersion des Polyurethan **PUR-COOH** oder gegebenenfalls der Dispersion des Polyurethans **PUR-COOH-CDI** zugegeben werden.

Die bevorzugten Herstellverfahren umfassen die Schritte Vorlegen der Dispersion des Copolymeren **A**, Zugabe unter Rühren eines Neutralisationsmittel bis pH-Wert 7.0 bis 9.0, insbesondere zwischen 7.5 und 8.5, Zugabe unter Rühren der Dispersion eines Polyurethan mit Carboxylgruppen und Carbodiimidgruppen **PUR-COOH-CDI** oder der Dispersion eines Polyurethan mit Carboxylgruppen **PUR-COOH,** gegebenenfalls Zugabe unter Rühren von CDI Zugabe von allfälligen Additiven, Kontrolle des pH-Wertes und Viskositätseinstellung mittels eines Verdickungsmittels.

Der erfindungsgemässe einkomponentige Dispersionsklebstoff erfährt durch Wärmezufuhr unter Bildung von N-Acylharnstoffen eine Vernetzung, woraus eine verstärkte Verklebung (Kohäsion) resultiert. Diese Wärmebehandlung findet bei einer Temperatur zwischen 50°C und 190°C, insbesondere zwischen 60°C und 140°C statt.

Der Dispersionsklebstoff kann zum Verkleben von unterschiedlichsten Materialien, insbesondere von Kunststoffen, Metallen, lackierten Oberflächen, Textilien, Schaumstoffen, Leder, Papier, Karton, Holz, Holzwerkstoffen oder Naturfaserwerkstoffen, verwendet werden. Es ist selbstverständlich möglich, dass Verklebungen unterschiedlicher Materialien miteinander erfolgen können.

Der erfindungsgemässe Dispersionsklebstoff ist isocyanatfrei und ist deshalb aus arbeitshygienischen und ökologischen Gründen äusserst vorteilhaft.

Der erfindungsgemässe Dispersionsklebstoff ist einkomponentig. Dies hat zur Folge -ganz im Gegensatz zu zweikomponentigen Dispersionen-, dass der Klebstoff keine Topfzeit aufweist. Dadurch ist der Klebstoff bei Raumtemperatur sehr lange, typischerweise mehr als 6 Monate, zumindest mehr als 4 Monate, lagerfähig, ohne dass die Klebeigenschaften negativ beeinträchtigt werden. Des weiteren sind keinerlei Mischungen durch den Anwender zu erstellen, wodurch auch das Risiko einer durch Mischfehlern mangelhafte Verklebung wegfällt. Schliesslich fallen durch den Einsatz einer einkomponentigen Dispersion auch grösstenteils die aufwendigen Spülvorgänge der Werkzeuge und Apparaturen sowie Zuleitungen weg.

Der Dispersionsklebstoff wird typischerweise auf verschiedene Arten verwendet.

In einer Nassverklebung wird der Klebstoff auf die Oberfläche des oder der zu verklebenden Körper aufgetragen und unmittelbar danach im nassen Zustand gefügt und gegebenenfalls gepresst. Hierbei muss jedoch mindestens einer der Klebepartner die in der Fuge vorhandene Feuchtigkeit aufnehmen können oder aber das Wasser muss durch ihn hindurch diffundieren können. In dem Masse, wie das Wasser aus der Klebefuge verschwindet, nimmt die Festigkeit zu. Die Festigkeit findet hierbei im ersten Schritt durch einen physikalischen Vorgang statt, nämlich durch Verdunstung des Wassers und dadurch bedingt Verfestigung durch Filmbildung. Im zweiten Schritt ist dann für die chemische Vernetzung eine Wärmezufuhr nötig.

In einer Kontaktklebung wird der Dispersionsklebstoff auf die Oberfläche der zu verklebenden Körper aufgetragen. Sobald das Wasser verdunstet ist, beziehungsweise sobald sich ein fester Klebstofffilm gebildet hat, werden die derart beschichteten Körper innerhalb der Offenzeit gefügt und gepresst, wodurch ein Klebverbund entsteht. Man unterscheidet zwischen Kaltkontakt- und Warmkontaktklebung. Bei der Warrmkontaktklebung wird durch eine Wärmezufuhr vor dem Fügen und Pressen der Klebstoff aktiviert.

In einer Verklebung durch einseitigen Klebstoffauftrag wird der Dispersionsklebstoff auf die Oberfläche eines der zu verklebenden Körper aufgetragen. Sobald das Wasser verdunstet ist, beziehungsweise sobald sich ein fester Klebstofffilm gebildet hat, werden derart beschichteten Körper mit einem Fügepartner innerhalb der Offenzeit gefügt. Erfolgt dieses Fügen bei etwa Raumtemperatur und unter Druck, wird üblicherweise von einem PSA-Klebstoff (Pressure Sensitive Adhesive) oder einem Haftklebstoff gesprochen. Erfolgt das Fügen bei erhöhter Temperatur und unter Druck, wird üblicherweise von einem Siegelklebstoff gesprochen. Die Verwendung des einkomponentigen wässrigen Dispersionsklebstoff als Siegelklebstoff wird bevorzugt.

Der erfindungsgemässe einkomponentige wässrige Dispersionsklebstoff kann als Kaschierklebstoff verwendet werden. Hierbei wird ein flächiges Material, welches typischerweise als Dekor bezeichnet wird, auf einen festen, geformten Untergrund (sogenannter Träger) aufgeklebt. Hierzu wird typischerweise entweder das Vakuumtiefziehverfahren oder das Presskaschierverfahren angewendet.

Beim Vakuumtiefziehverfahren wird der Dispersionsklebstoff auf den Träger aufgetragen. Anschliessend erfolgt eine Trocknung, bei der vorliegenden Erfindung bei Raumtemperatur oder im Trockenkanal bei maximal 40°C. Typischerweise wird die Folie (Dekor aus luftundurchlässigem Material) In einem Rahmen luftdicht eingespannt. Unterhalb der Folie befindet sich eine Unterform auf die der Träger gelegt wird. Unterform und Träger sind durchbohrt beziehungsweise luftdurchlässig. Das Gerät ist unterwärts weiter luftdicht abgeschlossen. Beim Absaugen der Luft aus dieser Vorrichtung schmiegt sich nun das Dekormaterial unter dem auf seine Oberfläche lastenden atmosphärischen Druck passgenau auf das Trägerteil. Das Dekormaterial wird vor dem Anlegen des Vakuums erhitzt. Das Dekormaterial ist wegen des zu erzeugenden Vakuum luftundurchlässig. Im Regelfall ist das Dekor eine Kunststofffolie.

Beim Presskaschierungsverfahren wird der Klebstoff ebenfalls auf dem Träger und gegebenenfalls auf dem Dekor aufgetragen, zumindest jedoch auf dem Träger. Ob der Klebstoffauftrag auch auf dem Dekormaterial erfolgt, hängt unter anderem vom Material an sich ab. So wird der Klebstoff lediglich auf den Träger appliziert, wenn das Dekormaterial typischerweise aus einem Textil mit Schaumstoffrücken, beispielsweise in Art eines offenporigen Polyurethan-Schnittschaumes, besteht. Besteht das Dekormaterial aus reinem Textil, Teppich oder Leder, so ist normalerweise ein beidseitiger Klebstoffauftrag auf Träger und Dekor nötig. Anschliessend erfolgt eine Trocknung typischerweise bei Raumtemperatur oder im Trockenkanal bei maximal 40°C. Die Verklebung vom Träger mit dem Dekor erfolgt nach Wärmeaktivierung unter Fügen und Pressen.

Bei all den beschriebenen Anwendungen kann der Klebstoffauftrag auf unterschiedliche Art erfolgen, sei dies durch ein Sprüh-, Streich-, Rakel-, Stempel-, Walz- oder Giessauftragsverfahren. Beim Sprühauftrag des Klebstoffs - dieses Verfahren wird bevorzugt eingesetzt- ist jedoch das Problem des sogenannten Oversprays zu berücksichtigten.

Es wurde nun überraschenderweise gefunden, dass mit dem erfindungsgemässen einkomponentigen wässrigen Dispersionsklebstoff auch flächige Materialien, insbesondere Dekormaterialien aus Folien vorbeschichtet, insbesondere ohne Sprühauftrag, werden können, um diese dann im Siegel-oder Heisskontaktklebeverfahren zu verkleben. Das Dekormaterial, beziehungsweise dessen Oberfläche, kann aus unterschiedlichstem Material sein, insbesondere aus Kunststoff, Textil, Schaumstoff, Leder, Papier oder Karton. Insbesondere Kunststoffe, vorzugsweise Kunststofffolien, basierend auf PVC (Polyvinylchlorid), TPO (Thermoplastisches Olefin Elastomer), ASA(Acrylonitril/Styrol/Acrylsäureester), EVA(Ethylen/Vinylacetat), PUR (Polyurethan), PA (Polyamid) oder PETP (Polyethylenterephtalat) haben sich als geeignet erwiesen.

Da die Folien vorbeschichtet sind, kann zwischen der Beschichtung und dem Verkleben längere Zeit verstreichen. Dies ist insbesondere dann wichtig, wenn die Beschichtung und Verklebung an unterschiedlichen Orten, erfolgt. So kann beispielsweise die Folie beim Folienhersteller beschichtet werden, welche darauf hin über längere Zeit gelagert und zu demjenigen Werk geliefert werden kann, welches dann diese vorbeschichtete Folie mit einem Träger verklebt. Trotz dieser langen Zeitspanne zwischen Vorbeschichtung und Verklebung ist ein tadelloser Klebverbund gewährleistbar. Dieser Vorteil ist insbesondere deshalb wichtig, weil in der Industrie, insbesondere der Fahrzeugherstellung ein Trend der Fertigung "weg vom Band hin zum Zulieferer" zu beobachten ist. Dieser Trend setzt sich seinerseits auch zwischen dem direkten Zulieferer -zum Beispiel von Autotüren- und dessen Zulieferer -zum Beispiel von Dekormateralien- fort.

Der Auftrag auf flächiges Dekormaterial erfolgt zweckmässig über Rakel- oder Walzenauftragsanlagen. Dies ist insbesondere aufgrund der ausgesprochen langen Offenzeit des erfindungsgemässen Dispersionsklebstoff ermöglicht. Somit ist auch das Problem des Oversprays nicht mehr vorhanden. Die Beschichtung des Dekors, in erster Linie der Folie oder des Textils, kann bereits bei dessen Hersteller erfolgen. Hierbei wird der einkomponentige Dispersionsklebstoff auf die Folie, beispielsweise eine TPO-Folie, vorzugsweise mittels Rakel- oder Walzenauftragsanlage aufgetragen. Die beschichtete Folie wird danach zweckmässig durch einen Trockenkanal geführt, in welchem dem Klebstoff das Wasser entzogen wird und die Filmbildung erfolgt. Danach läuft die vorbeschichtete Folie über Kühlwalzen, bevor sie bei Raumtemperatur aufgewickelt wird.

Der erfindungsgemässe Klebstoff zeichnet sich dadurch aus, dass ein Film des auf ein Substrat applizierten und getrockneten Dispersionsklebstoffes bei Raumtemperatur sowohl vor als auch nach der Aushärtung im wesentlich klebfrei ist. Deshalb können ein derart beschichtete Dekor oder Folien bis zur Weiterverarbeitung problemlos gelagert und transportiert werden, ohne dass beispielsweise ein Anbringen von Trennpapieren, beispielsweise silikonisierte Papiere, benötigt wird. Die Lagerzeit ist abhängig von dem zu beschichtenden Material. Bei der vorgängig angeführten Vorbeschichtung einer TPO-Folie beträgt die Lagerzeit bei einer Lagertemperaturen bis 30°C beispielsweise mehrere Monate.

Derart beschichtete Dekore, insbesondere Folien, werden dann im Kaschierwerk im Zuschnitt verwendet. Diese beschichteten Dekore oder Folien werden ins Kaschierwerkzeug eingelegt und durch Wärme aktiviert, bevor sie mit einer weiteren Oberfläche gefügt werden. Anschliessend werden sie insbesondere im Siegel- oder Heissklebekontaktverfahren, verklebt, um schliesslich den verklebten Artikel zu erhalten. Ein weiterer Vorteil dieses Prozesses liegt darin, dass im Kaschierwerk die Trocknungsstrecke wegfällt, so dass der gesamte Kaschierprozess deutlich vereinfacht wird und deshalb finanzielle Vorteile mit sich bringt.

Heutzutage wird der Klebstoff im Kaschierwerk gespritzt, was eine Absaugung bedingt. Diese befindet sich, damit das Material nicht in die Luft gelangt, hinter einer Filterwand oder hinter einer Wasserwand. Das mit Klebstoff-Teilchen geschwängerte Wasser wird anschliessend mit Fällungsmittel im Flotationsverfahren gereinigt, aufbereitet. Der derart entstandene Schlamm, beziehungsweise das Filtermaterial der Filterwand, muss anschliessend entsorgt werden. Im Gegensatz hierzu steht das neue, oben beschriebene, Verfahren, welches vorbeschichtete Dekore verwendet, bei welchem diese Kosten für die Entsorgung von verschmutzten Filterwänden und gegebenenfalls Kosten für Fällungsmittel sowie für dem Fällungsschlamm entfallen. Ebenso sind das Spülen und Reinigen der Anlage und der Gerätschaften stark reduziert, was zu massiven Kosteneinsparungen und ökologischen und arbeitshygienischen Vorteilen führt.

Der erfindungsgemässe Dispersionsklebstoff zeichnet sich deshalb dadurch aus, dass er einfach verarbeitet werden kann, dass er in Prozessen verwendet werden kann, die keinen Overspray verursachen und exzellente Eigenschaften verfügt bei gleichzeitig günstigem Preis.

Der Dispersionsklebstoff wird typischerweise in einer Menge von 30 bis 200 g/m² nass, bevorzugt 60 bis 120 g/m² nass auf die zu verklebende Oberfläche aufgetragen.

Der einkomponentige wässrige Dispersionsklebstoff wird bevorzugt für die Fertigung von nach dem Kaschierverfahren hergestellten dekorativen Innenauskleidungsteilen im Automobilbau wie Schalttafeln, Türseitenteilen, Hutablagen, Fertighimmel, Schiebehimmel, Mittelkonsolen, Handschuhfächer, Sonnenblenden, Säulen, Tür- und Armgriffe, Boden-, Ladeboden- und Kofferraumgruppen sowie Schlafkabinen- und Rückwände der Liefer- und Lastkraftwagen eingesetzt.

### Beispiele

Die im folgenden angeführten Beispiele dienen zur Illustration der Erfindung.

### Herstellung von einkomponentigen wässrigen Dispersionsklebstoffen

**Tabelle 1.**

| Verwendete Rohstoffe. | | |
|---|---|---|
| Rohstoff | | Beschreibung |
| *EVA-1* | **A** | EVA-Dispersion |
| | | Ethylen/Vinylacetat = 17% / 83% |
| | | Viskosität^{*} = 3800 ± 1000 mPas |
| | | pH = 4 - 5 |
| | | Wassergehalt: 40 ± 1% |
| *EVAA-1* | **A** | Ethylen / Vinylacetat / Acrylat-Dispersion |
| | | Ethylen / Vinylacetat / 2-Ethylhexylacrylat = 25% / 50% / 25% |
| | | Viskosität^{*} = 2000 ± 1000 mPas |
| | | pH = 3 - 5 |
| | | Wassergehalt: 35 ± 1% |
| *EVAA-2* | **A** | Ethylen / Vinylacetat / Acrylat-Dispersion |
| | | Ethylen / Vinylacetat / Hydroxethylacrylat = 15% / 80% / 5% |
| | | Viskosität* = 1000 - 4500 mPas |
| | | pH = 4.5 - 5.5 |
| | | Wassergehalt: 49 ± 1 % |
| *PU-1* | **PUR-COOH-CDI** | PUR-Dispersion mit COOH- und Carbodiimidgruppen |
| | | Viskosität**= 50 - 300 mPas |
| | | Teilchengrösse = ca. 0.1 µm |
| | | k-Wert nach Fikentscher = ca. 30-60 |
| | | Film-Reissfestigkeit = ca. 30 N/mm2 |
| | | Film-Reissdehnung = ca. 800 % |
| | | Wassergehalt: 60% |
| *CDI-1* | **CDI** | Oligocarbodiimid |
| | | Carbodiimid-Gehalt (rel.zu Polymer) = ca.12%,ca.3 mol/kg |
| | | Viskosität*** = 10 - 500 mPas |
| | | pH=8-10 |
| | | Wassergehalt: 80 % |
| Borchi® Gel L 75N (Borchers GmbH) | | Verdicker auf PUR-Basis |

| | | |
|---|---|---|
| *Brookfield RVT 3/20 (ISO 2555) | | |
| **(23°C, 250s⁻¹ nach DIN ISO 976) | | |
| ***(23°C, 250s⁻¹ nach DIN EN ISO 3219) | | |

Die Herstellung der erfindungsgemässen Beispiele ***B1, B2*** und ***B3*** erfolgte wie folgt:

Die wässrige Dispersion des oder der Copolymeren **A** wurde in einem Rührgefäss vorgelegt. Nach der Einstellung des pHs mittels Zugabe der Natronlauge auf einen Wert zwischen 7.5 und 8.5 der pH wurde die Polyurethan-Dispersion eingerührt. Anschliessend wurde allenfalls das Carbodiimid eingerührt. Nach weiterem Rühren während circa 20 Minuten wurde die Viskosität des Dispersionsklebstoffes mittels Verdicker auf eine Viskosität zwischen 5000 und 7000 mPas eingestellt. Die Viskosität wird hierbei bei 20°C mittels eines Brookfield-Viskosimeter RVT mit Spindel 3/5 UpM gemessen. Alle Beispiele ergaben eine homogene lagerstabile weisse Dispersion.

**Tabelle 2:**

| Dispersionsklebstoffzusammensetzungen | | | |
|---|---|---|---|
| | ***B1*** | ***B2*** | ***B3*** |
| *EVA-1* | 50 g | 50 g | 50 g |
| *EVAA-1* | | | 25 g |
| *EVAA-2* | | | 10 g |
| *PU-1* | 50 g | 50 g | 50 g |
| *CD-1* | | 5 g | 5 g |
| Borchi® Gel L 75 N | 0.2 g | 0.2 g | 0.2 g |
| NaOH (25%-ig in H₂O) | 0.2 g | 0.2 g | 0.2 g |
| Wasseranteil | 50 Gew.-% | 51 Gew.-% | 48% Gew.-% |
| Viskosität | 5000-6000mPas | 5000-6000mPas | 5000-6000mPas |

Als Referenzbeispiel für einen zweikomponentigen Polyurethandispersionsklebstoff ***Ref*****.** wurde SikaTherm 4120 als A-Komponente / SikaCure 4901 als B-Komponente (beide kommerziell erhältlich bei Sika AG, Schweiz) im Mischverhältnis A/B=100/5 (w/w) verwendet.

### Herstellung der Verklebungen

Die Klebstoffe wurden mit einer Spritzpistole der Firma Walther (Typ: HVLP-System, Düsenöffnung 1.8 ) auf einen planen ABS-Träger (150 mm x 50 mm) Cycolac G 360 der Firma General Electric aufgetragen. Der Klebstoffauftrag erstreckte sich auf zwei Drittel der Probekörperfläche, weil das restliche Drittel am Ende des Prüfkörperfläche zum Einspannen des Prüfkörpers benötigt wurde. Es resultierte ein tropfenförmiges Auftragsbild. Die Auftragsmenge des Klebstoffs betrug 80 - 100 g/m² nass. Nach einer Trockenzeit von einer Stunde bei Raumtemperatur wurde eine 1.2 mm dicke geprimerte PVC-Folie (Benecke-Kaliko, Hannover in schwarzer Farbe, wie sie im VW-Golf A4 zum Einsatz kommt) mit dem Träger gefügt und in einer Plattenpresse mit einem Pressdruck von 1.0 - 0.8 Kp/cm² verpresst. Bei diesem Vorgang war die der Folie zugewendete Platte der Presse beheizt (95°C), und es wurde die für den Siegelvorgang notwendige Aktivierungstemperatur in der Klebstofffuge von 65°C erreicht, indem durch die Folie hindurch geheizt wurde. Die für den Siegelvorgang notwendige Siegeltemperatur von 65°C wurde auf der vorhandenen Plattenpresse (Rohde + Walter, 26180 Rastede, Typ: LP30 ) innerhalb von 30 sec erreicht. Die Temperatureinstellung, Prüfung und Kontrolle erfolgte mit einem Temperaturfühler im Fugenbereich zwischen ABS-Träger und der PVC-Folie.
Vor dem sich anschliessenden Prüfverfahren erfolgt eine Verweilzeit von 5 Tagen bei Raumtemperatur.

Weiterhin wurden einerseits Probekörper hergestellt, bei welchen nach der Applikation des Klebstoffs 24 Stunden gewartet wurde, bis die Verklebung erfolgte ("Offenzeit 24h").

Schliesslich wurden Probekörper mit gealtertem Dispersionsklebstoff durchgeführt. Hierbei wurde der Klebstoff 14 Tage bei Raumtemperatur ('KL 14d/RT'), 14 Tage bei 40°C ('KL 14d/40°), 6 Wochen bei Raumtemperatur ('KL 6w/RT) oder 6 Wochen bei 40°C ('KL 6w/40°) gelagert, bevor der Prüfkörper gefertigt wurde.

### Prüfverfahren

### Rollschälfestigkeit (entsprechend DIN EN 1464)

Beim Rollenschälversuch selbst wurde der Prüfkörper nach jeder Lagerung 5 Tage bei Raumtemperatur (23°C/50% relative Luftfeuchtigkeit) gelagert, gegebenenfalls einer Wärme/Feuchtigkeitsbelastung unterworfen, und anschliessend jeweils 30 min bei 100°C gelagert, bevor er auch bei dieser Temperatur in einer klimatisierten Vorrichtung geschält wurde.

Die Prüfkörper wurden wie folgt abgeprüft:
- nach 5 Tagen Lagerung im Normalklima (23°C / 50% relative Luftfeuchtigkeit ('Endfestigkeit', EF) (ohne zusätzliche Wärme/Feuchtigkeitsbelastung)
- nach 10 Tagen Lagerung im Klimaschrank Schwitzwasser bei 40°C / 96% relative Luftfeuchtigkeit ('Testor')(zusätzliche Wärme/Feuchtigkeitsbelastung)
- nach 10 Tage im Wärmeschrank bei 100°C ('Wärmelagerung') (zusätzliche Wärme/Feuchtigkeitsbelastung)

Bei den Tests mit zusätzlicher Wärme/Feuchtigkeitsbelastung, d.h. 'Wärme'-oder 'Testor'-Lagerung wurden die Prüfkörper zusätzlich 24 Stunden bei Raumtemperatur konditioniert, bevor sie dem Rollenschälversuch zugeführt wurden.

### Lagerfähigkeit

Es wurden Proben von 5 kg einerseits bei Raumtemperatur (RT) und andererseits bei 40°C im Trockenschrank gelagert. In regelmässigen Abständen, alle 14 Tage, wurden die Proben äusserst vorsichtig visuell und mit Hilfe eines Spatels auf Absetzerscheinung, Aufrahmerscheinung, Koagulatbildung und gegebenenfalls stärkere Viskositätsveränderung hin geprüft.

### Sommersimulation

Es wurden Proben von 5 kg einerseits bei Raumtemperatur und andererseits bei 60°C im Trockenschrank während 3 Tagen gelagert. Diese Proben wurden im Rheometer auf Vernetzungsreaktionen hin untersucht:
Messgerät: Modular Compact Rheometer, Gerät-Typ MCR300 SN616966 (Physika, 73760 Ostfildern)
Methode: Oszillationstest, Deformation Amplitude gamma = 0.5%, f = 1 Hz, Normalkraft FN = 15N, Temperatur TC 20 / P-ETD 400 T 0 20...120°C lin, kontinuierliche Rampe.
Aus dem Kurvenverlauf von Speichermodul G', Verlustmodul G'' und Verlustfaktor tang δ vor und nach der Lagerung konnte das Ausmass von Vernetzungen ermittelt werden.
Beurteilung: Kurven deckungsgleich -> "keine Vernetzung"
Kurven nicht deckungsgleich ->"leichtes",bzw."starkes Vernetzen"

### Resultate

**Tabelle 3.**

| Festigkeiten der Verklebungen. | | | | |
|---|---|---|---|---|
| | ***B1*** | ***B2*** | ***B3*** | ***Ref*****.** |
| **Rollenschäl- Festigkeit [N/5cm]** | | | | |
| nach 5 d/RT EF | 37.0 | 38.8 | 34.7 | 28.5 |
| nach 10 d Testor | 26.6 | 26.2 | | 20.2 |
| nach 10 d/100°C | 37.0 | 35.0 | 28.1 | 15.7 |
| | | | | |
| Offenzeit 24h EF | 29.9 | 32.6 | | |
| KL 14d/RT EF | 32.2 | 40.2 | | |
| KL 14d/40° EF | 40.7 | 34.5 | | |
| KL 6w/RT EF | 33.6 | 42.2 | | |
| KL 6w/40° EF | 34.9 | 34.6 | | |
| | | | | |

| **Lagerstabilität** | | | | |
|---|---|---|---|---|
| 2 Monate RT | stabil geringe Agglomerate, leicht homog.* | stabil geringste Agglomerate leicht homog.* | völlig stabil | n.a. |
| 2 Monate 40°C | leichtes Aufrahmen | leichtes Aufrahmen | völlig stabil | n.a. |
| 3 d 60°C | | | völlig stabil keine Vernetzung | n.a. |

| | | | | |
|---|---|---|---|---|
| * homog.= homogenisierbar | | | | |

Aus den Resultaten der Tabelle 3 ist ersichtlich, dass die Verklebungen mittels erfindungsgemässen Beispielen ***B1, B2*** und ***B3*** bedeutend stärkere Festigkeiten und Wärmebeständigkeiten als das Vergleichsbeispiel ***Ref*****.** aufweisen und damit für die Praxis geeignete Dispersionsklebstoffe darstellen.
Die erfindungsgemässen Dispersionsklebstoffe ***B1, B2*** und ***B3*** waren nach dessen Applikation und Trocknung bei Raumtemperatur im wesentlichen klebfrei, wie aufgrund einer Prüfung mit dem Fingerrücken ermittelt wurde.

## Patentansprüche

1. Einkomponentiger wässriger Dispersionsklebstoff enthaltend
mindestens ein Copolymer **A** der Monomere Ethylen, Vinylacetat und gegebenenfalls mindestens einem (Meth)acrylat
und
entweder mindestens ein Polyurethan mit Carboxylgruppen und Carbodiimidgruppen **PUR-COOH-CDI**
oder eine Mischung eines Polyurethan mit Carboxylgruppen **PUR-COOH** und einem Carbodiimid **CDI.**

2. Einkomponentiger wässriger Dispersionsklebstoff gemäss Anspruch 1, **dadurch gekennzeichnet, dass** er gleichzeitig mindestens ein Carbodiimid **CDI** und mindestens ein Polyurethan mit Carboxylgruppen und Carbodiimidgruppen **PUR-COOH-CDI** enthält.

3. Einkomponentiger wässriger Dispersionsklebstoff gemäss Anspruch 1, **dadurch gekennzeichnet, dass** er gleichzeitig mindestens ein Polyurethan mit Carboxylgruppen und Carbodiimidgruppen **PUR-COOH-CDI** und mindestens ein Polyurethan mit Carboxylgruppen **PUR-COOH** enthält.

4. Einkomponentiger wässriger Dispersionsklebstoff gemäss einem der Ansprüche 1 bis 3, **dadurch gekennzeichnet, dass** das Copolymer **A** ein Copolymer aus Ethylen und Vinylacetat ist.

5. Einkomponentiger wässriger Dispersionsklebstoff gemäss einem der Ansprüche 1 bis 3, **dadurch gekennzeichnet, dass** das Copolymer **A** ein Copolymer aus Ethylen und Vinylacetat und mindestens einem (Meth)acrylat ist.

6. Einkomponentiger wässriger Dispersionsklebstoff gemäss einem der Ansprüche 1 bis 3, **dadurch gekennzeichnet, dass** der Dispersionsklebstoff eine Mischung von mindestens einem Copolymer **A** aus Ethylen und Vinylacetat und von mindestens einem Copolymer **A** aus Ethylen und Vinylacetat und mindestens einem (Meth)acrylat enthält.

7. Einkomponentiger wässriger Dispersionsklebstoff gemäss einem der vorhergehenden Ansprüche, **dadurch gekennzeichnet, dass** das (Meth)acrylat ein Acrylat ist, insbesondere ausgewählt ist aus der Gruppe umfassend 2-Ethylhexylacrylat, 2-Hydroxyethylacrylat und 2-Hydroxypropylacrylat und 2-Hydroxybutylacrylat sowie Mischungen davon.

8. Einkomponentiger wässriger Dispersionsklebstoff gemäss einem der vorhergehenden Ansprüche, **dadurch gekennzeichnet, dass** das Carbodiimid **CDI** und/oder das Polyurethan mit Carboxylgruppen und Carbodiimidgruppen **PUR-COOH-CDI** das Strukturelement der Formel (I) aufweisen,

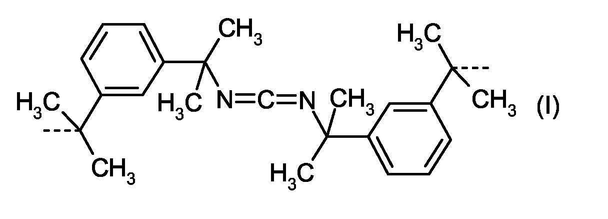

9. Einkomponentiger wässriger Dispersionsklebstoff gemäss einem der vorhergehenden Ansprüche, **dadurch gekennzeichnet, dass** das Gewichts-Verhältnis von **A / (PUR-COOH-CDI + PUR-COOH)** zwischen 0.1 und 10, insbesondere zwischen 1 und 6, liegt.

10. Einkomponentiger wässriger Dispersionsklebstoff gemäss einem der vorhergehenden Ansprüche, **dadurch gekennzeichnet, dass** der Dispersionsklebstoff weiterhin ein Poly((meth)acrylat) enthält.

11. Einkomponentiger wässriger Dispersionsklebstoff gemäss einem der vorhergehenden Ansprüche, **dadurch gekennzeichnet, dass** der Dispersionsklebstoff weiterhin ein Stabilisator enthält ausgewählt aus der Gruppe umfassend Netzmittel, Cellulose, Polyvinylalkohol, Polyvinylpyrrolidon sowie Mischungen davon enthält.

12. Einkomponentiger wässriger Dispersionsklebstoff gemäss einem der vorhergehenden Ansprüche, **dadurch gekennzeichnet, dass** der Dispersionsklebstoff bei einer Temperatur zwischen 50°C und 190°C, insbesondere zwischen 50 und 140°C, bevorzugt zwischen 60°C und 80°C vernetzt wird.

13. Einkomponentiger wässriger Dispersionsklebstoff gemäss einem der vorhergehenden Ansprüche, **dadurch gekennzeichnet, dass** ein Film des auf ein Substrat applizierten und getrockneten Dispersionsklebstoffes bei Raumtemperatur sowohl vor als auch nach der Aushärtung im wesentlich klebfrei ist.

14. Verwendung eines wässrigen Dispersionsklebstoffes gemäss einem der Ansprüche 1 bis 13 zum Beschichten einer Oberfläche, insbesondere eines flächigen Materials, bevorzugt einer Folie.

15. Verwendung gemäss Anspruch 14, **dadurch gekennzeichnet, dass** die zu beschichtende Oberfläche aus Kunststoff, Textil, Schaumstoff, Leder, Papier oder Karton besteht.

16. Verwendung eines wässrigen Dispersionsklebstoffes gemäss einem der Ansprüche 1 bis 13 zum Verkleben von Kunststoffen, Metallen, lackierten Oberflächen, Textilien, Schaumstoffen, Leder, Papier, Karton, Holz, Holzwerkstoffen oder Naturfaserwerkstoffen.

17. Verwendung eines wässrigen Dispersionsklebstoffes gemäss einem der Ansprüche 1 bis 13 zum Kaschieren von Oberflächen mit flächigen Materialien, insbesondere aus Kunststoffen, Textilien, Schaumstoffen, Leder, Papier oder Karton.

18. Beschichteter Gegenstand, **dadurch gekennzeichnet, dass** er mit einem wässriger Dispersionsklebstoff gemäss einem der Ansprüche 1 bis 13 beschichtet wurde.

19. Beschichteter Gegenstand gemäss Anspruch 18, **dadurch gekennzeichnet, dass** der beschichtete Gegenstand eine beschichtete Folie ist.

20. Verklebter Gegenstand, **dadurch gekennzeichnet, dass** er mit einem wässriger Dispersionsklebstoff gemäss einem der Ansprüche 1 bis 13 verklebt wurde.

21. Verklebter Artikel gemäss Anspruch 20, **dadurch gekennzeichnet, dass** ein beschichteter Gegenstand gemäss Anspruch 18 oder 19 mit einer weiteren Oberfläche kontaktiert wird und anschliessend unter Erhitzen verklebt wird.

22. Verklebter Artikel gemäss Anspruch 21, **dadurch gekennzeichnet, dass** der Artikel im Siegelverfahren verklebt wird.
